# EUROPÄISCHE PATENTSCHRIFT

(11) **EP 1 380 814 B1**
(45) Veröffentlichungstag und Bekanntmachung des Hinweises auf die Patenterteilung: **21.09.2005**
(21) Anmeldenummer: 03007655.8
(22) Anmeldetag: 03.04.2003
(51) Int. Cl.: G01C 21/36, G06F 3/023

(54) **Verfahren zur Eingabe eines Namens in eine Navigationsvorrichtung**
Method of inputting a name into a navigation device
Procédé d'entrée d'un nom dans un dispositif de navigation

(30) Priorität: 10.07.2002 DE 10231689
(43) Veröffentlichungstag der Anmeldung: 14.01.2004
(73) Patentinhaber: ROBERT BOSCH GMBH, 70442 Stuttgart (DE)
(72) Erfinder: Lueer, Stefan, 31137 Hildesheim (DE); Fiedler, Marco, 37115 Duderstadt (DE)

(56) Entgegenhaltungen:
- DE-A- 10 012 441
- DE-A- 10 042 983

## Beschreibung

### Stand der Technik

Die Erfindung geht aus von einem Verfahren zur Eingabe eines Namens nach der Gattung des Hauptanspruchs. Es sind schon Eingabeverfahren von Namen z.B. für die Eingabe eines Fahrziels in eine Navigationsvorrichtung in einem Kraftfahrzeug bekannt. Hierbei wird vorzugsweise durch eine menügesteuerte Auswahl ein Name aus einer Liste ausgewählt oder durch die Eingabe einer Zeichenfolge bestimmt. Eine Verarbeitung eines eingegebenen Namens durch die Navigationsvorrichtung kann dabei nur dann erfolgen, wenn der eingegebene Name und eine zugeordnete Position der Navigationsvorrichtung zur Verfügung stehen, damit eine Fahrtroute zu dem auf diese Weise bezeichneten Fahrziel berechnet werden kann. Ferner ist es bekannt, z.B. bei Navigationsvorrichtungen eine Auswahl eines Straßennamens ohne eine vorherige Stadtauswahl zur Zieleingabe anzubieten, um die Eingabe eines Fahrziels zu vereinfachen. Dabei wird von einem Benutzer zunächst der Straßenname eingegeben, während die Stadt, in der die Straße liegen soll, erst anschließend ausgewählt wird. Insbesondere bei einem für die Auswahl sehr großen, zugrundeliegenden Kartengebiet hat dies den Nachteil, dass eine große Datenmenge bereitgestellt werden muss und eine Vereinfachung der Eingabe durch eine vorausgestellte Straßenauswahl nicht gegeben ist, da der eingegebene Straßenname möglicherweise in einer Vielzahl von Ortschaften existiert. Außerdem bleibt bei einer Bestimmung des einzugebenden Straßennamens mittels einer eingegebenen Zeichenfolge auch nach einer Vielzahl eingegebener Zeichen die Menge der auswählbaren Straßen sehr hoch, da die zugrundeliegende Straßenanzahl selbst bereits sehr groß ist. Somit kann auch durch eine automatische Folgebuchstabenausdünnung, das heißt den Ausschluss von Straßen, deren Namen nicht zu der bisher eingegebenen Zeichenfolge passen, die Eingabe nur unwesentlich vereinfacht wird.

Aus der DE 100 12 441 A1 ist ein Verfahren zur Zieleingabe an einem Navigationsgerät bekannt, wobei Zeichen eines Zielnamens eingegeben werden und in Abhängigkeit des oder der eingegebenen Zeichen eine Liste von Zielnamen erzeugt wird, die mit dem oder den eingegebenen Zeichen beginnen, wobei die Zielnamensliste nach der Entfernung der den Zielnamen zugeordneten Ziele von einem aktuellen Standort erzeugt wird.

Die Zielnamensliste enthält nur solche Zielnamen, deren zugeordnete Zielorte innerhalb eines vorgegebenen Umkreises um den aktuellen Standort liegen.

### Vorteile der Erfindung

Das erfindungsgemäße Verfahren zur Eingabe eines Namens mit den Merkmalen des Anspruchs 1 hat demgegenüber den Vorteil, dass durch die Beschränkung des Vergleichs auf ein Teilgebiet die Anzahl der auswählbaren Namen verringert wird, so dass einerseits die Auswahl eines gewünschten Namens vereinfacht und andererseits der Vergleich einer eingegebenen Zeichenfolge mit gespeicherten Namen schneller durchgeführt werden kann. Für die Routenberechnung steht dennoch das gesamte Kartengebiet zur Verfügung. Hierbei ist es möglich, erfindungsgemäß unzusammenhängende geografische Gebiete zu einem Teilgebiet für die Eingabe zu verknüpfen, wenn der Benutzer z.B. im allgemeinen zwischen zwei entfernt voneinander liegenden Städten pendelt und im allgemeinen nur Ziele in diesen beiden Städten auswählen wird.

Durch die in den abhängigen Ansprüchen aufgeführten Maßnahmen sind vorteilhafte Weiterbildungen und Verbesserungen des im Hauptanspruch angegebenen Verfahrens zur Eingabe eines Namens möglich. Besonders vorteilhaft ist, dass die Auswahl eines einzugebenden Namens auf Namen begrenzt wird, denen eine Position in der Umgebung der mobilen Einheit zugeordnet wird, in die der Name zur weiteren Verarbeitung durch die mobile Einheit eingegeben werden soll. Hierdurch kann die Einschränkung auf ein Teilgebiet automatisch vorgenommen werden. Dennoch ist mit einer hohen Wahrscheinlichkeit gewährleistet, dass das gewünschte Fahrziel in der vorgegebenen Umgebung der aktuellen Fahrzeugposition liegt. Außerdem können in Randgebieten eines Datensatzes auch über den Rand hinaus gehende Positionen von Namen berücksichtigt werden, ohne den Aufwand für die Auswahl zu vergrößern.

Es ist ferner vorteilhaft, das Teilgebiet durch einen Nutzer auswählen zu lassen. Hierbei kann der Benutzer insbesondere Teilgebiete festlegen, in die er wahrscheinlich recht häufig fahren wird, um so die Eingabezeit eines konkreten Fahrziels in diesem Teilgebiet zu verkürzen.

Ferner ist vorteilhaft, dass aus den gespeicherten Namen in dem Teilgebiet eine Liste gebildet wird, die vorzugsweise alphabetisch sortiert und der weiteren Auswahl zugrundegelegt wird. In einer bevorzugten Ausführungsform kann diese Liste zumindest teilweise zur Anzeige gebracht werden, so dass ein Benutzer den von ihm gewünschten Namen auswählen kann.

Ferner ist vorteilhaft, eine Ausdünnung, der auswählbaren, gespeicherten Namen dadurch vorzunehmen, dass für die weitere Auswahl diejenigen Namen ausgeschlossen werden, deren Anfang nicht mit der bereits eingegebenen Zeichenfolge übereinstimmt. Der Reduktionsaufwand wird dabei durch die Einschränkung auf das Teilgebiet minimiert, und der Aufwand für die Eingabe wird weiter reduziert.

Ferner ist besonders vorteilhaft, bei einer Eingabe in eine Navigationsvorrichtung zunächst den Straßennamen für ein vorgegebenes Teilgebiet einzugeben, da sich Straßennamen zwar in verschiedenen Städten wiederholen können, jedoch oftmals nicht in jeder Stadt vorhanden sind. Hierdurch kann eine nachfolgende Eingabe eines Stadtnamens oder einer Region gegebenenfalls entfallen. Durch die Festlegung auf ein vorgebbares Teilegebiet wird dabei eine weitere Reduktion der zur Auswahl stehenden Straßennamen erreicht.

### Zeichnung

Ausführungsbeispiele der Erfindung sind in der Zeichnung dargestellt und in der nachfolgenden Beschreibung näher erläutert. Es zeigen
Figur 1 eine Navigationsvorrichtung zur Durchführung des erfindungsgemäßen Verfahrens,
Figur 2 eine Kartendarstellung mit einer erfindungsgemäßen Auswahl eines Teilgebiets,
Figur 3 eine Ermittlung einer Liste von auswählbaren Namen nach dem erfindungsgemäßen Verfahren,
Figur 4 ein Ausführungsbeispiel für einen erfindungsgemäßen Verfahrensablauf.

### Beschreibung des Ausführungsbeispiels

Die vorliegende Erfindung kann für eine beliebige Eingabe ortsgebundener Namen verwendet werden, z.B. für die Eingabe von Ortsnamen, von Bezeichnungen bestimmter Einrichtungen, so z.B. Sehenswürdigkeiten oder Ämtern, für die Eingaben von Teilnehmernamen eines Kommunikationsnetzes zur Ermittlung von Telefonnummern, für die Eingabe von Haltestellen von Bussen oder Bahnen oder für die Eingabe von Straßennamen in eine Recheneinheit. Die mobile Einrichtung kann als eine tragbare Recheneinheit ausgeführt sein oder kann feste in ein Fahrzeug integriert sein. Bei dem im nachfolgenden erläuterten, bevorzugten Ausführungsbeispiel ist die mobile Einrichtung als eine in einem Fahrzeug angeordnete Navigationsvorrichtung ausgeführt, die in dem Fahrzeug eingebaut oder mobil in das Fahrzeug bringbar ist. Das im nachfolgenden erläuterte, erfindungsgemäße Verfahren wird anhand der erfindungsgemäßen Eingabe eines Straßennamens in die Navigationsvorrichtung erläutert.

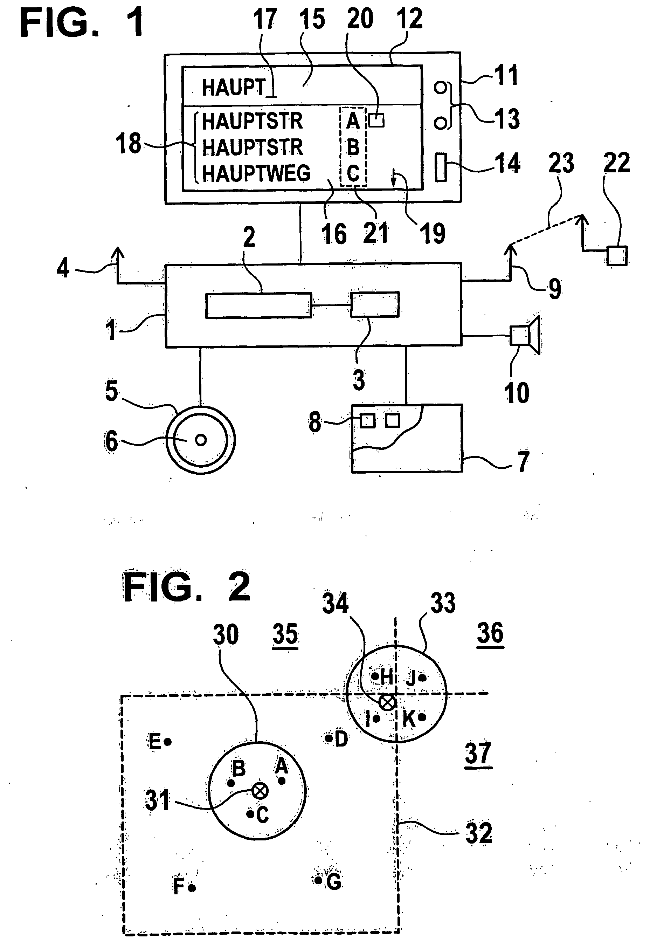

In der Figur 1 ist eine Navigationsvorrichtung 1 dargestellt, die in einem Kraftfahrzeug angeordnet ist. Die Navigationsvorrichtung 1 verfügt über eine Recheneinheit 2 zur Fahrtroutenberechnung, die mit einem Arbeitsspeicher 3 verbunden ist. Ferner ist an die Navigationsvorrichtung 1 eine Ortungseinheit 4 zur Positionsbestimmung des Fahrzeugs, vorzugsweise über das GPS (Global Positioning System), angeschlossen. Die Recheneinheit 2 kann auf ein Datenträgerlaufwerk 5 mit einem darin eingelegten Datenträger 6 zugreifen, auf dem eine digitale Karte mit einem Straßennetz gespeichert ist. Ferner sind Bezeichnungen von Ortsnamen in und an diesem Straßennetz auf dem Datenträger 6 abgelegt. Die Navigationsvorrichtung 1 wird über eine Bedieneinheit 7 gesteuert, an der Drucktasten 8, die in der Figur 1 teilweise dargestellt sind, angeordnet sind. Die Navigationsvorrichtung 1 berechnet mittels der Recheneinheit 2 eine Fahrtroute von einer aktuellen Fahrzeugposition, die über die Ortungseinheit 4 ermittelt wird, zu einem über die Bedieneinheit 7 eingegebenen Fahrziel unter Zugriff auf die auf dem Datenträger 6 abgelegte digitale Karte. Ferner ist an der Navigationsvorrichtung 1 auch eine Funkschnittstelle 9 angeordnet, über die weitere Daten, z.B. Verkehrshinweise oder weitere Kartendaten, zur Fahrtroutenberechnung an die Navigationsvorrichtung 1 übertragbar sind. Fahrhinweise, z.B. Abbiege-Hinweise, werden an den Fahrer über einen Lautsprecher 10 und/oder über eine Anzeigeeinheit 11 ausgegeben. Die Anzeigeeinheit 11 weist hierzu eine Bildschirmfläche 12 auf, die vorzugsweise als ein flacher Bildschirm, z.B. eine Flüssigkristallanzeige oder eine Elektrolumineszenzanzeige, ausgeführt ist. In der Bildschirmfläche 12 können Fahrhinweise in Textform oder grafisch ausgegeben werden. Ferner kann auch eine Kartendarstellung in der Bildschirmfläche 12 angezeigt werden. In einer bevorzugten Ausführungsform können neben der Bildschirmfläche 12 an der Anzeigeeinheit 11 weitere Bedienelemente, z.B. Drucktasten 13 oder ein Drehrad 14, angeordnet sein. Die Bildschirmfläche 12 weist einen Eingabebereich 15 und einen Ausgabebereich 16 auf. In dem Eingabebereich 15 ist eine bereits eingegebene Zeichenfolge zur Eingabe eines Straßennamens für die Eingabe eines Fahrziels dargestellt: Über die Bedieneinheit 7 wurde bisher die Buchstabenfolge "Haupt" eingegeben. Hieran schließt sich eine Eingabemarke 17 an, die signalisiert, dass eine weitere Eingabe von Zeichen möglich ist.

In dem Ausgabebereich 16 sind drei Straßennamen 18 zur Auswahl dargestellt. Mittels der Bedienelemente 13, 14 kann der Benutzer eine dieser Straßennamen auswählen. Reicht der Ausgabebereich 16 zur Anzeige nicht aus, so wird ein Pfeil 19 dargestellt, der den Benutzer darauf hinweist, dass weitere Straßen zur Auswahl anstehen. Diese können mittels des Drehrades 14 zur Anzeige gebracht werden, indem die Bildschirmdarstellung in dem Ausgabebereich 16 verändert wird. Mit einer Anzeigemarke 20 wird angezeigt, welche der dargestellten Straßen durch eine Bestätigung mittels einer der Drucktasten 13 oder eine der Drucktasten 8 als Fahrziel ausgewählt werden kann. Die Position der Anzeigemarke 20 ist ebenfalls über das Drehrad 14 änderbar. Neben den Straßennamen 18 wird jeweils der Name der Stadt 21 zu dem jeweiligen Straßennamen 18 in dem Ausgabebereich 16 angezeigt, wobei in dem beschriebenen Ausführungsbeispiel die Buchstaben "A", "B", "C" für einen vollständigen Stadtnamen stehen sollen. Anstelle des Stadtnamens kann jedoch auch eine Aussagekräftige Abkürzung, z.B. in Deutschland das Autokennzeichen, angezeigt werden.

Wird nun beispielsweise als nächster Buchstabe ein S angegeben, verbleiben lediglich die Hauptstraße in A und die Hauptstraße in B in der Anzeige, während der Hauptweg in C nicht mehr zu der dann eingegebenen Zeichenfolge passt. Bleibt nur ein Straßenname übrig, so ist anschließend noch abzufragen, in welcher Stadt die gewünschte Straße liegen soll. Im vorliegenden Beispiel ist daher noch z.B. über die Auswahlliste abzufragen, ob die Hauptstrasse in A oder in B gewünscht ist. In einer anderen Ausführungsform ist es auch möglich, einen Straßennamen, den es in mehreren Städten in dem Teilgebiet gibt, nur einmal in die Liste aufzunehmen. Wird der Straßenname schließlich ausgewählt, so wird erst im Anschluss ein Auswahlmenü angezeigt, aus dem der Benutzer die von ihm gewünschte Stadt auswählen kann.

In der Figur 2 ist eine Kartendarstellung gezeigt, aus der die Positionen der Städte A, B und C in der Karte erkennbar sind. Alle drei Städte liegen in einer Umgebung 30 um eine aktuelle, ermittelte Fahrzeugposition 31 herum. Ferner ist auch eine zweite Umgebung 33 eingezeichnet, die für die Erläuterung eines ersten Anwendungsbeispiels nicht berücksichtigt werden soll. Der gestrichelte Kasten kennzeichnet einen Datenbestand eines Kartengebietes 32, der auf dem Datenträger 6 gespeichert ist. Übrige Städte E, D, F und G sind zwar ebenfalls auf dem Datenträger 6 vorhanden, werden jedoch nicht in die Umgebung 30 mit einbezogen. Die Umgebung 30 bildet damit ein Teilgebiet, womit sich die Auswahl eines Straßennamens auf die in der Umgebung 30 liegenden Städte A, B, C und die in diesen Städten liegenden Straßen beschränkt. Die Umgebung 30 ist vorzugsweise als ein Umkreis um die aktuelle Fahrzeugposition herum definiert. Die Größe dieses Umkreises kann fest vorgegeben sein, z.B. mit einem Radius von 30 km um die aktuelle Fahrzeugposition herum. Dieser Radius kann jedoch in einer bevorzugten Ausführungsform durch den Benutzer geändert werden. Ferner ist in einer anderen bevorzugten Ausführungsform der Radius zur Bestimmung der Umgebung um die aktuelle Fahrzeugposition 31 herum von der Besiedlungsdichte in dem durchfahrenen Gebiet abhängig, wobei bei einer niedrigen Besiedlungsdichte automatisch ein größerer Radius gewählt wird, der bei einer höheren Besiedlungsdichte wiederum automatisch verringert wird. Die Umgebung 30 kann jedoch auch in Gestalt eines Vielecks, z.B. eines Vierecks, aus der Kartenoberfläche gewählt werden. In einer bevorzugten Ausführungsform ist das gesamte Kartengebiet bereits in eine Vielzahl von Vielecken unterteilt, wobei zu jedem Vieleck bereits eine Liste der in diesem Vieleck liegenden Straßennamen gespeichert ist. Wird die aktuelle Fahrzeugposition in einem der Vielecke ermittelt, so wird aus den Straßen in diesem Vieleck und aus den Straßen von allen Vielecken, die zu diesem Vieleck benachbart sind, eine Liste zur Auswahl eines gespeicherten Namens gebildet. In einer weiteren Ausführungsform kann die Umgebung 30 auch als ein Verwaltungsgebiet, z.B. ein Bezirk oder ein Landkreis, definiert sein. In einer weiteren Ausführungsform kann die Umgebung auch durch eine Eingabe eines Benutzers ausgewählt werden, z.B. durch eine Auswahl eines Verwaltungsgebiets.

In der Figur 2 ist die zweite Umgebung 33 dargestellt, die eine aktuelle Fahrzeugposition 34 enthält, die am Rand des Kartengebiets 32 liegt, das auf dem Datenträger 6 enthalten ist. Für die Erläuterung dieses Anwendungsbeispiels soll von dieser Fahrzeugposition ausgegangen werden. Hierbei ist die Stadt H einem zweiten Kartengebiet 35, die Stadt J einem dritten Kartengebiet 36 und die Stadt K einem vierten Kartengebiet 37 zugeordnet. Die Straßennamen von benachbarten Städten H, J und K die außerhalb dieses Kartengebiets liegen und die somit nicht auf dem Datenträger 6 gespeichert sind, können in einer bevorzugten Ausführungsform über die Funkschnittstelle 9 von einer externen Dienstezentrale 22 über eine Funkverbindung 23 abgerufen werden. In einer weiteren Ausführungsform kann der Benutzer auch zum Einlegen eines weiteren Datenträgers aufgefordert werden. In jedem Fall werden für die Bestimmung der auswählbaren Straßen nicht alle Straßen des angrenzenden Kartengebietes berücksichtigt, sondern nur diejenigen Straßen, die in der zweiten Umgebung 33 der aktuellen Fahrzeugposition 34 liegen.

Erfindungsgemäss wird durch einen Benutzer eine mittels Eingabe über die Bedienelemente festegelegte erste Umgebung 30 mit einer zweiten Umgebung, so z.B. die erste Umgebung 30 mit der zweiten Umgebung 33, verknüpft so dass ein Fahrziel aus der Gesamtmenge der beiden Umgebungen zugeordneten Straßennamen ausgewählt wird.

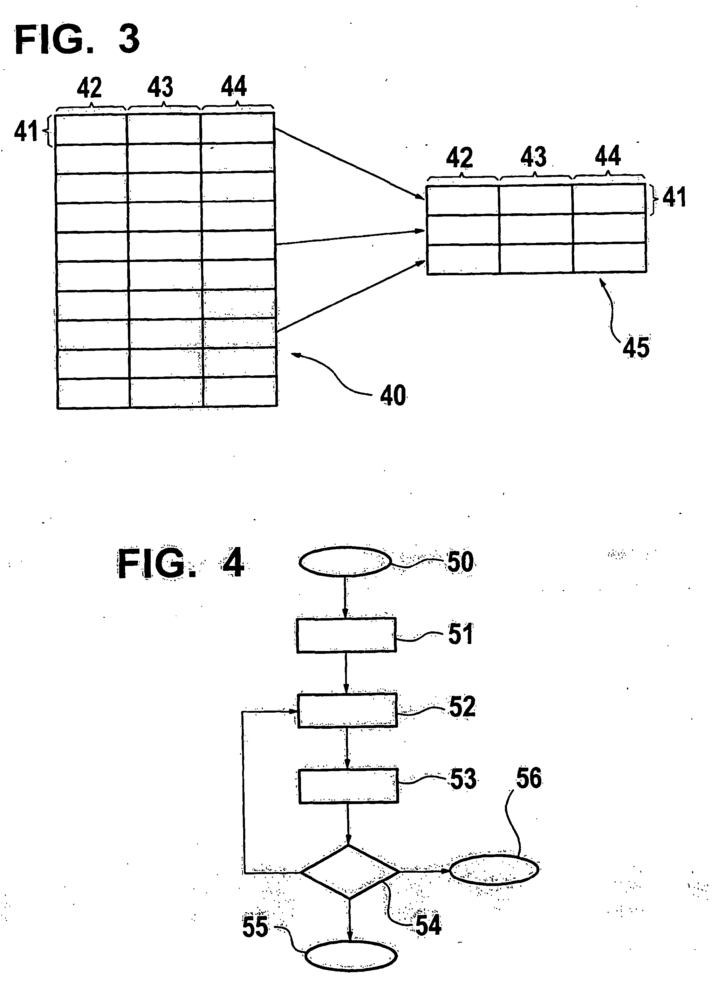

In der Figur 3 ist ein Ausführungsbeispiel für eine erfindungsgemäße Erstellung einer Liste von auswählbaren Straßen aus einer Umgebung dargestellt. In einer Gesamttabelle 40 von Straßen sind alle Straßen zusammengefasst, die auf dem Datenträger 6 abgelegt sind. Jede Zeile 41 der Liste, von der aus Gründen der Übersichtlichkeit nur eine bezeichnet, ist einer Straße zugeordnet. In einer ersten Spalte 42 der Gesamttabelle 40 ist ein Straßenname abgelegt. In einer zweiten Spalte 43 ist ein Name der Stadt abgelegt, in der die Straße liegt. In einer dritten Spalte 44 sind Positionskoordinaten der Straße abgelegt, die nach der Auswahl der jeweiligen Straße für die Routenberechnung zu dieser Straße verwendet werden. Aus der Gesamtliste 40 werden diejenigen Straßen extrahiert die in der ersten Umgebung 30 bzw. in der zweiten Umgebung 33 liegen. Sie bilden eine Teilliste 45. Die weitere Auswahl von Straßennamen erfolgt durch eine Auswahl aus der Teilliste 45. In einem bevorzugten Ausführungsbeispiel sind die Gesamtliste 40 und zumindest die Teilliste 45 alphabetisch sortiert. In einer nicht gezeigten Ausführungsform ist zudem die Zuordnung zu einem bestimmten Verwaltungsgebiet, z.B. zu einer Stadt oder zu einem Bezirk, unmittelbar in der Liste gespeichert. In einer weiteren Ausführungsform kann die Zuordnung auch aus der Position selbst bestimmt werden. In einer weiteren Ausführungsform können Informationen über besondere Objekte an der Position, sogenannte Points of Interest, oder eine Kategorie eines besonderen Objekts, z.B. Hotel, Restaurant oder Sehenswürdigkeit, in den Tabellen gespeichert sein.

Beispielhaft wird anhand der Figur 4 im Folgenden ein erfindungsgemäßer Verfahrensablauf beschrieben, der mit einem Initialisierungsschritt 50 beginnt und bei dem die Fahrzieleingabe z.B. durch eine Aktivierung der Navigationsvorrichtung 1 ausgelöst wird. In einem anschließenden Ermittlungsschritt 51 wird die aktuelle Fahrzeugposition vorzugsweise mittels der Ortungseinheit 4 bestimmt. Zudem wird durch die Recheneinheit 2 die Umgebung um die aktuelle Fahrzeugposition festgelegt, aus der eine Auswahl von Straßennamen erfolgen soll. Ebenfalls wird in dem Ermittlungsschritt 51 eine Liste mit gespeicherten Namen für die Auswahl eines Fahrziels erstellt, wobei die Straßen der zur Auswahl stehenden Straßennamen in der Umgebung liegen. Die Liste wird bevorzugt in dem Arbeitsspeicher 3 abgelegt. Ergänzend kann anstelle einer Liste von Straßennamen auch eine Liste von Zeigern auf die entsprechenden Listeeinträge in der Gesamtliste 40 bestimmt werden. In einer weiteren Ausführungsform kann ein Benutzer auch das Teilgebiet durch eine Eingabe über die Bedienelemente 8, 13, 14 selbst wählen. Die Auswahl erfolgt dabei z.B. aus einer Auswahl einzelner Objekte, z.B. des Landes, eines Bezirkes oder einer Stadt. Eine Eingabe lautet z.B. "Land Deutschland; Stadt Hamburg". Hieran kann sich eine weitere Auswahl einer Kategorie besonderer Fahrziele anschließen, z.B. Restaurants, Hotels oder Tankstellen. Ferner ist auch eine Auswahl von Straßen einer eingegebenen Stadt möglich.

Erfindungsgemäss wird ein erstes, durch einen Benutzer bestimmtes Teilgebiet mit einem oder mehreren anderen Teilgebieten der Karte beliebig verknüpft. Hierbei können die einzelnen Teilgebiete aneinandergrenzen, wie es z.B. bei Nachbarstädten der Fall ist. Ferner ist auch die Verbindung von Gebieten möglich, die unzusammenhängend sind, also nicht aneinandergrenzen. So kann beispielsweise das Stadtgebiet der Städte Hamburg und Frankfurt am Main miteinander zu einem Teilgebiet verknüpft werden. Ein Vergleich einer eingegebenen Zeichenkette z.B. mit gespeicherten Straßenamen erfolgt somit nur dann, wenn der gespeicherte Straßenname in Frankfurt oder Hamburg liegt. Es lassen sich hierbei unterschiedliche Arten von Teilgebieten miteinander verknüpfen, z.B. ein Stadtgebiet mit einem Bundesland und mit einem Landkreis. Eine Auswahl kann z.B. auch Teilgebiete in mehreren Staaten miteinander verbinden. Die Auswahl des Teilgebiets wird dabei vorzugsweise durch eine entsprechende Anzeige in der Bildschirmfläche 12 unterstützt, anhand der eine Auswahl erfolgen kann.

An den Ermittlungsschritt 51 schließt sich ein Eingabeschritt 52 an, in dem ein erstes, von einem Benutzer eingegebenes Zeichen über die Bedieneinheit 7 erfasst wird. In einem anschließenden Vergleichsschritt 53 wird das eingegebene Zeichen mit dem ersten Zeichen der dem Teilgebiet zugewiesenen Namen der Liste verglichen und es werden diejenigen Namen aus der Liste entfernt, zu denen das eingegebene Zeichen als Anfangsbuchstabe nicht passt. In einem anschließenden Prüfschritt 54 wird geprüft, ob nur noch ein Name in der Liste verblieben ist. Ist dies der Fall, so wird zu einem Endschritt 55 verzweigt, in dem die gewählte Straße als ein Fahrziel festgelegt wird. Hieran schließt sich eine Mehrdeutigkeitsauswahl für den Fall an, dass der Straßenname in mehreren Städten des Teilgebiets vorkommt. Die Mehrdeutigkeitsauswahl erfolgt beispielsweise durch Anzeige einer weiteren Liste der möglichen Städte, so dass das Fahrziel erst nach Auswahl der entsprechenden Stadt feststeht. Ist die Liste dagegen leer, so wird zu einer nachgeschalteten Eingabeverfahren 56 übergeben, in dem der Benutzer darauf hingewiesen wird, dass der eingegebene Straßenname nicht in dem festgelegten Teilgebiet liegt. Der Benutzer kann daraufhin den eingegebenen Namen auf Korrektheit überprüfen und gegebenenfalls korrigieren. Ferner kann der Benutzer auch eine erweiterte Namensbestimmung festlegen, bei der nun nicht mehr nur die ausgewählte Umgebung, sondern der gesamte, zur Verfügung stehende Datenbestand berücksichtigt wird. Wird in dem Prüfschritt 54 festgestellt, dass durch die bisherige Eingabe ein Straßenname noch nicht eindeutig bestimmt wird, so wird zu dem Eingabeschritt 52 zurückverzweigt, bei dem ein zweites Zeichen eingegeben wird, das an das erste Zeichen angehängt wird und mit diesem eine Zeichenfolge bildet. Die nachfolgenden Verfahrensschritte 53, 54 werden nun so oft wiederholt, bis entweder zu dem Endschritt 55 oder zu dem Eingabeverfahren 56 verzweigt wird.

## Patentansprüche

1. Verfahren zur Eingabe eines Namens in eine mobile Einrichtung mit in der mobilen Einrichtung gespeicherten Namen und den gespeicherten Namen jeweils zugeordneten Positionen in einer Karte, wobei Zeichen des einzugebenden Namens zur Auswahl einer der gespeicherten Namen erfasst werden, wobei die eingegebenen Zeichen mit gespeicherten Namen verglichen werden, wobei ein gespeicherter Namen nur dann mit den eingegebenen Zeichen verglichen wird, wenn der gespeicherte Name einer Position in einem vorgebbaren Teilgebiet der Karte zugeordnet ist, **dadurch gekennzeichnet, dass** das Teilgebiet aus mindestens zwei unzusammenhängenden Gebieten gebildet wird.

2. Verfahren nach Anspruch 1, **dadurch gekennzeichnet, dass** die mindestens zwei unzusammenhängenden Gebiete Verwaltungsgebiete sind.

3. Verfahren nach einem der Ansprüche 1-2, **dadurch gekennzeichnet, dass** eine Position der mobilen Einrichtung ermittelt wird, dass eine Umgebung der Position der mobilen Einrichtung ermittelt wird und dass die Umgebung der Position der mobilen Einrichtung als eines der unzusammenhängenden Gebiete festgelegt wird.

4. Verfahren nach einem der Ansprüche 1-2, **dadurch gekennzeichnet, dass** das Teilgebiet durch einen Benutzer ausgewählt wird.

5. Verfahren nach einem der vorherigen Ansprüche, **dadurch gekennzeichnet, dass** aus den gespeicherten Namen in der Umgebung eine Liste gebildet wird.

6. Verfahren nach Anspruch 5, **dadurch gekennzeichnet, dass** die Liste alphabetisch sortiert wird.

7. Verfahren nach einem der vorherigen Ansprüche, **dadurch gekennzeichnet, dass** eine Zeichenfolge eingegebener Zeichen mit den Anfangsbuchstaben der gespeicherten Namen in dem Teilgebiet verglichen wird und dass für weitere Vergleiche nur noch die Namen betrachtet werden, bei denen die Zeichenfolge mit den Anfangsbuchstaben der gespeicherten Namen übereinstimmt.

8. Verfahren nach einem der vorherigen Ansprüche, **dadurch gekennzeichnet, dass** die auswählbaren Namen zumindest teilweise angezeigt werden.

9. Verfahren nach einem der vorhergehenden Ansprüche, **dadurch** gekennzeicbnet, dass die mobile Einrichtung eine Navigationsvorrichtung ist, dass die gespeicherten Namen Straßennamen umfassen und dass der Name zur Zielführung eines Fahrzeugs in eine Straßennetz in die Navigationsvorrichtung eingegeben wird.

10. Navigationsvorrichtung zur Durchführung des Verfahrens nach Anspruch 9, **gekennzeichnet durch** eine Bedieneinheit (7) zur Eingabe eines Fahrziels und **durch** einen Datenträger (6), auf dem eine digitale Karte mit einem Straßennetz und Ortsnamen in und an diesem Straßennetz abgelegt sind, wobei den gespeicherten Namen (A, ..., K) jeweils Positionen in der digitalen Karte zugeordnet sind, wobei im Gebrauch Zeichen des einzugebenden Namens zur Auswahl einer der gespeicherten Namen erfasst werden, wobei im Gebrauch die eingegebenen Zeichen mit gespeicherten Namen verglichen werden, wobei im Gebrauch ein gespeicherter Name nur dann mit den eingegebenen Zeichen verglichen wird, wenn der gespeicherte Name einer Position in einem vorgebbare Teilgebiet der Karte zugeordnet ist und wobei im Gebrauch das Teilgebiet aus mindestens zwei unzusammenhängenden Gebieten (30, 33) der digitalen Karte gebildet wird.

## Claims

1. Method for inputting a name into a mobile device with names stored in the mobile device and positions on a map which are respectively associated with the stored names, where characters in the name which is to be input are detected for selecting one of the stored names, where the input characters are compared with stored names, and where a stored name is compared with the input characters only if the stored name is associated with a position in a prescribable subregion of the map, **characterized in that** the subregion is formed from at least two disjointed regions.

2. Method according to Claim 1, **characterized in that** the at least two disjointed regions are administrative regions.

3. Method according to either of Claims 1-2, **characterized in that** a position is ascertained for the mobile device, **in that** surroundings are ascertained for the position of the mobile device, and **in that** the surroundings of the position of the mobile device are stipulated as one of the disjointed regions.

4. Method according to either of Claims 1-2, **characterized in that** the subregion is selected by a user.

5. Method according to one of the preceding claims, **characterized in that** a list is formed from the stored names in the surroundings.

6. Method according to Claim 5, **characterized in that** the list is sorted alphabetically.

7. Method according to one of the preceding claims, **characterized in that** a character string of input characters is compared with the initial letters of the stored names in the subregion, and **in that** for further comparisons only the names for which the character string matches the initial letters of the stored names are now considered.

8. Method according to one of the preceding claims, **characterized in that** the selectable names are at least partly displayed.

9. Method according to one of the preceding claims, **characterized in that** the mobile device is a navigation apparatus, **in that** the stored names include road names, and **in that** the name is input into the navigation apparatus in order to navigate a vehicle within a road network.

10. Navigation apparatus for carrying out the method according to Claim 9, **characterized by** a control unit (7) for inputting a journey destination and by a data storage medium (6) storing a digital map with a road network and location names in and on this road network, where the stored names (A, ..., K) each have associated positions in the digital map, where, in use, characters in the name which is to be input are detected in order to select one of the stored names, where, in use, the input characters are compared with stored names, where, in use, a stored name is compared with the input characters only if the stored name is associated with a position in a prescribable subregion of the map, and where, in use, the subregion is formed from at least two disjointed regions (30, 33) of the digital map.

## Revendications

1. Procédé pour entrer un nom dans un dispositif mobile avec des noms enregistrés dans celui-ci et des positions associées respectivement aux noms enregistrés sur une carte, des caractères du nom à entrer étant saisis pour sélectionner l'un des noms enregistrés, les caractères entrés étant comparés avec des noms enregistrés, un nom enregistré n'étant comparé avec les caractères entrés qui si le nom enregistré est associé à une position dans une zone partielle déterminée de la carte,
**caractérisé en ce que**
la zone partielle est formée à partir d'au moins deux zones non cohérentes.

2. Procédé selon la revendication 1,
**caractérisé en ce qu'**
au moins deux zones non cohérentes sont des zones administratives.

3. Procédé selon l'une quelconque des revendications 1-2,
**caractérisé en ce qu'**
une position du dispositif mobile est déterminée, un environnement de la position du dispositif mobile est déterminé et l'environnement de la position du dispositif mobile est défini comme l'une des zones non cohérentes.

4. Procédé selon l'une quelconque des revendications 1-2,
**caractérisé en ce que**
la zone partielle est sélectionnée par un utilisateur.

5. Procédé selon l'une quelconque des revendications précédentes,
**caractérisé en ce qu'**
une liste est constituée dans l'environnement à partir des noms enregistrés.

6. Procédé selon la revendication 5,
**caractérisé en ce que**
la liste est classée par ordre alphabétique.

7. Procédé selon l'une quelconque des revendications précédentes,
**caractérisé en ce qu'**
une suite de caractères entrés est comparée avec les lettres initiales des noms enregistrés dans la zone partielle, et pour d'autres comparaisons on ne considère plus que les noms dont la suite de caractères correspond aux lettres initiales des noms enregistrés.

8. Procédé selon l'une quelconque des revendications précédentes,
**caractérisé en ce que**
les noms sélectionnables sont affichés du moins partiellement.

9. Procédé selon l'une quelconque des revendications précédentes,
**caractérisé en ce que**
le dispositif mobile est un dispositif de navigation, les noms enregistrés comprennent des noms de rues, et le nom est entré dans le dispositif de navigation pour guider un véhicule vers sa destination dans un réseau routier.

10. Dispositif de navigation pour la mise en oeuvre du procédé selon la revendication 9,
**caractérisé par**
une unité de maniement (7) pour entrer une destination et par un support de données (6) sur lequel est enregistrée une carte numérique avec un réseau routier et des noms de lieux situés dans et à proximité de ce réseau routier, dont les noms enregistrés (A, ..., K) sont respectivement associés à des positions sur la carte numérique, des caractères du nom à entrer étant saisis pendant l'utilisation pour sélectionner l'un des noms enregistrés, les caractères entrés pendant l'utilisation étant comparés avec des noms enregistrés, un nom enregistré n'étant comparé avec les caractères entrés que si le nom enregistré est associé à une position dans une zone partielle déterminée de la carte, cette zone partielle étant formée pendant l'utilisation à partir d'au moins deux zones (30, 33) non cohérentes de la carte numérique.
